# EUROPEAN PATENT SPECIFICATION

(11) **EP 3 287 306 B1**
(45) Date of publication and mention of the grant of the patent: **08.04.2020**
(21) Application number: 16782829.2
(22) Date of filing: 18.01.2016
(51) Int. Cl.: B60G 7/02, B60G 3/20, B60K 7/00

(54) **VEHICLE SUSPENSION STRUCTURE**
FAHRZEUGAUFHÄNGUNGSSTRUKTUR
STRUCTURE DE SUSPENSION DE VÉHICULE

(30) Priority: 20.04.2015 JP 2015085580
(43) Date of publication of application: 28.02.2018
(73) Proprietor: FOMM Corporation, Saiwai-ku, Kawasaki-shi Kanagawa 212-0032 (JP)
(72) Inventor: TSURUMAKI, Hideo, Kawasaki-shi Kanagawa 212-0032 (JP); OHTONARI, Yukinori, Kawasaki-shi Kanagawa 212-0032 (JP); MORITA, Takayuki, Kawasaki-shi Kanagawa 212-0032 (JP)
(74) Representative: TBK
(86) International application number: PCT/JP2016/051323
(87) International publication number: WO 2016/170807

(56) References cited:
- EP-A1- 2 520 448
- JP-A- H03 112 724
- JP-A- H03 148 315
- JP-A- 2012 144 228
- JP-A- 2013 226 994
- JP-U- S62 139 814
- US-A1- 2003 111 834
- US-A1- 2009 133 944

## Description

### TECHNICAL FIELD

The present invention relates to a vehicle-suspension structure.

### BACKGROUND ART

Various types of vehicle suspensions are known.

In JP2007-126005A, a double-wishbone-type front suspension is described. In the double-wishbone-type suspension, a knuckle (a wheel mounting member) is linked with an upper suspension arm (hereinafter, appropriately referred to as "upper arm") and a lower suspension arm (hereinafter, appropriately referred to as "lower arm") via ball joints. The distance between the center of the contact patch of a tire and a point at which the kingpin axis connecting the two ball joints intersects with the ground surface is called a scrub radius (also called as kingpin offset). If the scrub radius is excessively large, problems, such as increase in steering effort and increase in kickback from the road surface, are caused.

Thus, in order to prevent the scrub radius from becoming excessively large, a suspension geometry is normally designed such that the ball joints approach the Lire center line as much as possible. In JP2007-126005A, by arranging the lower ball joint in a road wheel, the ball joints are provided so as to approach the tire center line as much as possible.

Incidentally, the inventors are currently developing an ultra-compact electric vehicle. In order to ensure a large cabin space as much as possible, the inventors are considering the use of in-wheel motors.

Even when the in-wheel motors are used, as shown in JP2003-300420A and JP2005-337355A, it is widely performed that the ball joints are provided so as to approach the tire center line as much as possible by arranging the lower ball joint in the road wheel.

JP S62 139814 U discloses a vehicle-suspension structure having the features of the preamble of independent claim 1.

### SUMMARY OF INVENTION

However, with the ultra-compact electric vehicle, which is being developed by the inventors, because the size of tire is small, there is a limit to reduction in the size of the motor in order to ensure suitable motor output. Thus, with an ordinary design, because the ball joints are provided so as to be away from the tire center line, it is difficult to reduce the scrub radius, and in addition, there is a risk that the suspension arm interferes with the road surface.

The present invention has been conceived in light of these conventional problems. An object of the present invention is to provide a vehicle-suspension structure suitable for an ultra-compact vehicle.

The present invention provides the following solutions to solve the above-mentioned problems to be solved. In the following, although the reference signs used in the description are given for ease of understanding, there is no limitation thereto. In addition, the configuration described with the reference signs may be replaced or modified appropriately.

According to the present invention a vehicle-suspension structure comprises the features of independent claim 1.

Further advantageous developments are set out in the dependent claims.

### BRIEF DESCRIPTION OF DRAWINGS

[FIG. 1] FIG. 1 is an isometric diagram showing an embodiment of a vehicle-suspension structure according to the present invention.
[FIG. 2] FIG. 2 is a longitudinal cross-sectional diagram of the vehicle-suspension structure of the embodiment.
[FIG. 3] FIG. 3 is an isometric diagram showing a comparative embodiment of the vehicle-suspension structure.
[FIG. 4] FIG. 4 is a longitudinal cross-sectional diagram of the vehicle-suspension structure of the comparative embodiment.

### DESCRIPTION OF EMBODIMENTS

Embodiments of the present invention will be described below with reference to the attached drawings.

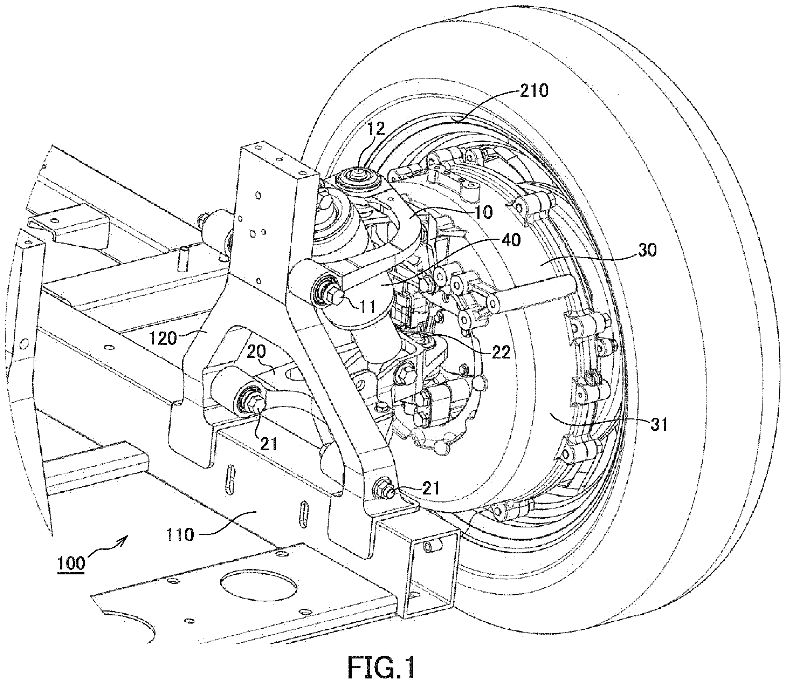

FIG. 1 is an isometric diagram showing an embodiment of a vehicle-suspension structure according to the present invention.

A vehicle-suspension structure 1 illustrated in FIG. 1 is of a double-wishbone-type and includes an upper arm (an upper suspension arm) 10, a lower arm (a lower suspension arm) 20, and a wheel mounting unit 30.

As illustrated in FIG. 1, the upper arm 10 has a substantially U-shape and is mounted on a suspension-mounting member 120 via a pivot shaft 11 so as to be freely swingable. The suspension-mounting member 120 is fixedly attached to a ladder side frame 110 provided so as to extend in the front-to-rear direction of a vehicle (the longitudinal direction of the vehicle). The upper arm 10 extends in the left-right direction of a vehicle frame from the pivot shaft 11 serving as the swinging center.

As illustrated in FIG. 1, the lower arm 20 has a substantially A-shape and is mounted on the suspension-mounting member 120 via a pivot shaft 21 so as to be freely swingable. The lower arm 20 extends in the left-right direction of the vehicle frame from the pivot shaft 21 serving as the swinging center.

In this embodiment, the wheel mounting unit 30 is an in-wheel motor unit, and at predetermined portions of a motor housing 31, the upper arm 10 and the lower arm 20 are linked to the wheel mounting unit 30 via an upper ball joint 12 and a lower ball joint 22, respectively. FIG. 1 shows a state in which the motor housing 31 is projected out from a road wheel 210, and an external appearance of this projected portion is of a substantially thick cylindrical shape having a short axis.

In addition, a shock absorber 40 is arranged between a vehicle frame 100 and the lower arm 20 in order to damp shock from a road surface.

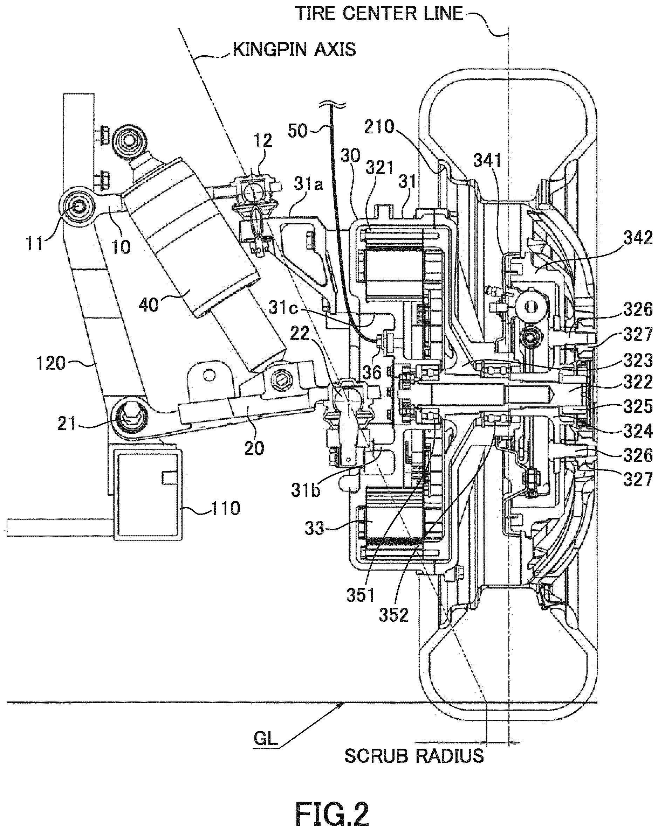

Next, the vehicle-suspension structure 1 will be further described with reference to a longitudinal cross-sectional diagram of the vehicle-suspension structure shown in FIG. 2.

As described above, the ladder side frame 110 is provided so as to extend in the front-to-rear direction of the vehicle (the longitudinal direction of the vehicle). The suspension-mounting member 120 is fixedly attached to the ladder side frame 110.

The lower arm 20 is mounted on a lower part of the suspension-mounting member 120 so as to be freely swingable about the pivot shaft 21 as the center. A tip end of the lower arm 20 is linked to the wheel mounting unit 30 (the motor housing 31) via the lower ball joint 22. In addition, the shock absorber 40 is linked to the lower arm 20. The shock from the road surface is damped by the shock absorber 40.

The upper arm 10 is mounted on an upper part of the suspension-mounting member 120 so as to be freely swingable about the pivot shaft 11 as the center. A tip end of the upper arm 10 is linked to the wheel mounting unit 30 (the motor housing 31) via the upper ball joint 12.

The wheel mounting unit 30 includes the motor housing 31, a rotor 32, a stator (a stator core) 33, and a brake unit 34.

The motor housing 31 is a case for accommodating the rotor 32 and the stator 33. An upper-ball-joint mounting portion 31a and a lower-ball-joint mounting portion 31b are mounted on the motor housing 31. The upper-ball-joint mounting portion 31a and the lower-ball-joint mounting portion 31b may be integrally formed with the motor housing 31.

The rotor 32 includes a rotor core 321, a rotor shaft 322, and a connecting member 323. The rotor core 321 has a substantially thick cylindrical shape having a short axis (a doughnut shape) and is arranged immediately inside the motor housing 31. The rotor shaft 322 is supported by the motor housing 31 via a single-row bearing 351 and a double-row bearing 352. A tip end of the rotor shaft 322 protrudes out from the motor housing 31. A hub 324 is spline-fitted to this protruded portion and is fastened and secured by a nut 325. With such a configuration, the hub 324 integrally rotates with the rotor shaft 322. Hub bolts 326 are protruded from the hub 324. The road wheel 210 is fastened to the hub bolts 326 with wheel nuts 327. The connecting member 323 is bolt-fastened to the rotor core 321 and is spline-fitted to the rotor shaft 322. With the above-mentioned configuration, as the rotor core 321 is rotated, the rotor shaft 322 is integrally rotated to drive a wheel.

The stator (the stator core) 33 has a substantially thick cylindrical shape having a short axis (a doughnut shape) and is arranged immediately inside the rotor core 321, thereby being fixed to the motor housing 31.

In this embodiment, the brake unit 34 is a drum brake. In the brake unit 34, a brake cylinder, a brake shoe, and so forth are accommodated in a back plate 341 and a brake drum 342. The back plate 341 is fixed to the motor housing 31. The brake drum 342 integrally rotates with the hub 324 (the rotor shaft 322). A brake is applied to the rotating brake drum 342 (the hub 324) by pushing the brake shoe (the lining) against an inner circumferential surface of the brake drum 342 with a force exerted by the brake cylinder.

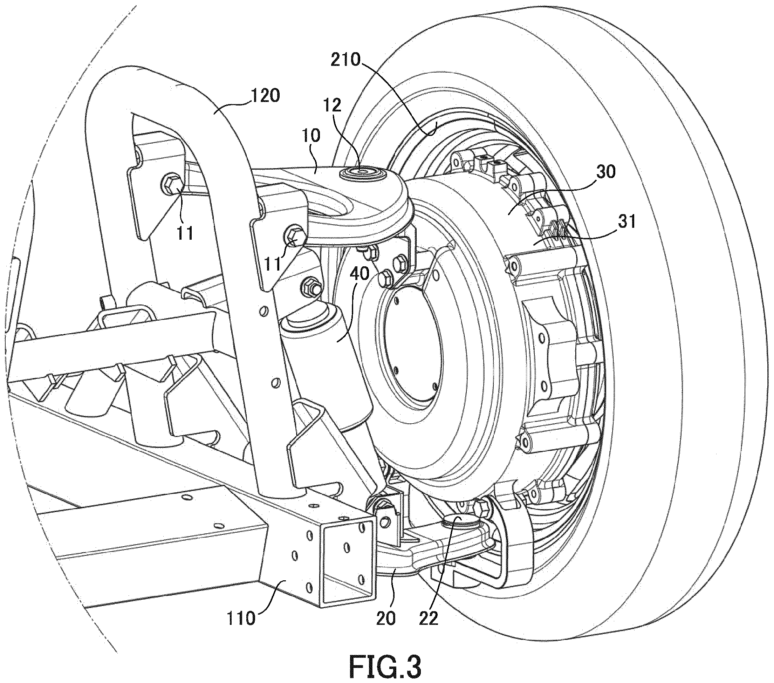

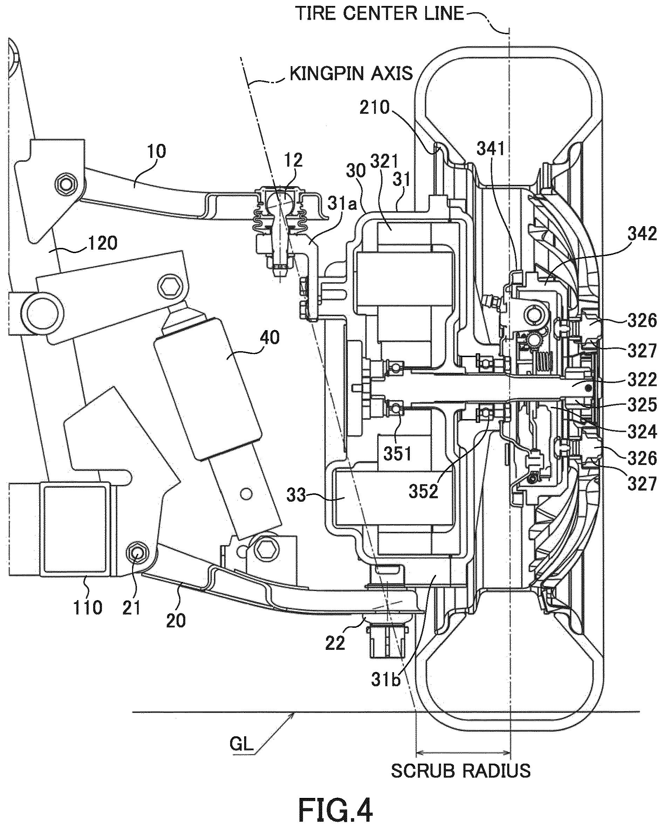

The problems to be solved by this embodiment will be described with reference to a comparative embodiment for ease of understanding this embodiment. FIG. 3 is an isometric diagram showing the comparative embodiment of the vehicle-suspension structure, and FIG. 4 is a longitudinal cross-sectional diagram of the comparative embodiment. Elements having the similar function with those in the above-mentioned configuration are given the same reference signs, and any duplicating description thereof is omitted appropriately.

The inventors are currently developing the ultra-compact electric vehicle. In order to ensure a large cabin space as much as possible, the inventors are considering the use of in-wheel motors. When a brake is applied, because weight transfer toward the front occurs, in order to efficiently regenerate energy, it is preferable to install the in-wheel motors in front wheels but not in rear wheels.

In order to ensure suitable motor output, the rotor and the stator need to have a somewhat large size. However, in such a case, the size of the in-wheel motor becomes large.

If the size, especially the thickness, of the in-wheel motor is large, as is clear from FIG. 4, the positions of the ball joints 12 and 22, which are linking parts for the suspension arms 10 and 20, are shifted away from the tire center line. This increases the scrub radius (the kingpin offset) that is the distance between the kingpin axis connecting the upper ball joint 12 and the lower ball joint 22 and the center of the contact patch of the tire. As a result, problems, such as the increase in steering effort, the increase in kickback from the road surface, and so forth, are caused.

In addition, if the size, especially the diameter, of the in-wheel motor is increased, as is clear from FIGs. 3 and 4, the position of the lower ball joint 22 that is a linking part for the lower arm 20 is lowered. As a result, a ground clearance is reduced, and there is a risk that the lower arm 20 interferes with the road surface.

In order to solve the above-mentioned problems, the inventors propose the following vehicle-suspension structure. The vehicle-suspension structure will be described again with reference to FIG. 2.

The length of the rotor shaft 322 forming the rotation-center line of the wheel is reduced such that the lower ball joint 22 is arranged at the position that overlaps with the rotor shaft (the rotation-center line) 322 when the rotor shaft (the rotation-center line) 322 is saw through from the axial direction. In other words, the length of the rotor shaft 322 is reduced such that the lower ball joint 22 is positioned on a line extending from the rotor shaft 322. With such a configuration, the lower arm 20 is arranged at a high position, and thereby, it is possible to increase the ground clearance and to make the lower arm 20 less likely to interfere with the road surface.

In addition, in conjunction with reduction of the length of the rotor shaft 322, a predetermined region 31c of the back side of the motor housing 31 (a region positioned at the proximal side of the rotor shaft 322 where the lower ball joint 22 can be arranged) is formed into a recessed shape. The lower ball joint 22 is provided such that at least a part thereof is positioned in this recessed portion 31c, in other words, the lower ball joint 22 is provided so as to be positioned towards the outer side of the vehicle frame as much as possible. With such a configuration, as shown in FIG. 2, it is possible to reduce the scrub radius and to reduce the kickback from the road surface and the steering effort. In addition, a coupling part 36 of a motor cable 50 to be connected to the in-wheel motor is arranged in the recessed portion 31c. Although driving wheels pick up stones, sands, muddy water, and so forth, in this embodiment, because the coupling part 36 of the motor cable 50 is located at an inner-side position in the recessed portion 31c of the motor housing 31, the stones, sands, muddy water, and so forth picked up by the driving wheels are less likely to hit the coupling part 36, thereby providing a protection for the coupling part 36.

In addition, by reducing the length of the rotor shaft 322, distance to support the rotor shaft 322 is also reduced, and thus, it is possible to support the rotor shaft 322 with the single-row bearing 351 and the double-row bearing 352. Especially, in the embodiment, the double-row bearing 352 is arranged inside the brake unit 34 so as to be positioned towards the outer side as much as possible. With such a configuration, the double-row bearing 352 is provided so as to intersect with the tire center line. With such a configuration, strengthening against the input from the road surface is achieved, and it is possible to improve a durability performance of the in-wheel motor.

Further, because the pivot shaft 21 serving as the swinging center of the lower arm 20 is positioned above the ladder side frame 110, even when the lower arm 20 is arranged at the high position, a stroke of the lower arm 20 can be sufficiently ensured. In addition, the configuration in which the pivot shaft 21 is positioned above the ladder side frame 110 means that, in other words, the ladder side frame 110 is positioned below the pivot shaft 21. With such a configuration, it is possible to lower a floor and to ensure a large cabin space.

Although the embodiment of the present invention has been described above, the above-mentioned embodiment is merely an illustration of a part of an application example of the present invention, and there is no intention to limit the technical scope of the present invention to the specific configuration of the above-mentioned embodiment.

For example, the concept in which the lower ball joint 22 is provided such that at least a part thereof is arranged at a position that overlaps with the rotation-center line of the wheel when the rotation-center line is saw through from the axial direction can also be applied to other in-wheel motors than those of the above-described type. In other words, in the above description, the in-wheel motor in which the rotor core 321 arranged at the radially outer side and the rotor shaft (the rotation-center line of the wheel) 322 arranged at the center side are connected by the connecting member 323, and the road wheel 210 is mounted on the rotor shaft 322 via the hub 324 is illustrated.

In addition, in the above-mentioned description, the vehicle-suspension structure 1 of the double-wishbone-type is illustrated. However, it is not intended to limit the technical scope of the present invention to the double-wishbone-types. For example, the present invention can also be applied to a strut type suspension, a multi link type suspension, and so forth.

Further, in the above-mentioned description, although a drum brake is illustrated as the brake unit, the brake unit may be a disk brake.

The above-mentioned embodiment can be combined appropriately.

## Claims

1. A vehicle-suspension structure comprising:
a suspension arm (20) that extends in a left-right direction of a vehicle frame from a pivot shaft (21) serving as a swinging center;
a wheel mounting unit (30) to which a wheel is mounted, the wheel mounting unit (30) being configured to drive the wheel; and
a ball joint (22) that is arranged at a position intersecting with a rotation-center line of the wheel driven by the wheel mounting unit (30), the ball joint (22) being linked to the suspension arm (20) and to the wheel mounting unit (30),
**characterized in that**
the pivot shaft (21) serving as the swinging center of the suspension arm (20) is positioned above a ladder side frame (110),
the wheel mounting unit (30) includes a rotor core (321), a rotor shaft (322), and a connecting member (323),
the rotor core (321) has a substantially thick cylindrical shape having a short axis and being arranged immediately inside a motor housing (31),
the rotor shaft (322) is supported by the motor housing (31) via a single-row bearing (351) arranged on a vehicle- frame side and a double-row bearing (352) arranged on an outer side, the rotor shaft (322) being configured such that a hub (324) for mounting the wheel is spline-fitted and fastened and secured by a nut (325) to a tip end of the rotor shaft (322) protruding out from the motor housing and further towards outside of the double-row bearing (352) arranged on the outer side, and the wheel mounting unit (30) being configured to drive the wheel mounted on the hub (324) by rotation of the rotor shaft (322).

2. The vehicle-suspension structure according to Claim 1, wherein
the hub (324) is arranged in a road wheel (210) of the wheel so as to drive the wheel.

3. The vehicle-suspension structure according to Claim 1 or 2, wherein
the wheel mounting unit (30) has a vehicle-frame side predetermined region (31c) through which the rotation-center line of the wheel passes, the predetermined region being formed into a recessed shape, and
the ball joint (22) is arranged such that at least a part thereof is positioned in the recessed portion (31c) of the wheel mounting unit (30).

4. The vehicle-suspension structure according to Claim 3, wherein
the coupling part (36) of the motor cable (50) connected to the in-wheel motor is provided in the recessed portion (31c) of the wheel mounting unit (30).

5. The vehicle-suspension structure according to any one of Claims 1 to 4, wherein
the wheel mounting unit (30) is provided with a ball-joint mounting portion (31b) that is configured to arrange the ball joint (22) at the position intersecting with the rotation-center line of the wheel.

6. The vehicle-suspension structure according to any one of Claims 1 to 5, wherein
the double-row bearing (352) is arranged inside a brake unit (34).

7. The vehicle-suspension structure according to any one of Claims 1 to 6, wherein
the double-row bearing (352) is arranged so as to intersects with the tire center line.

8. The vehicle-suspension structure according to any one of Claims 1 to 7, wherein
the suspension arm (20) is a lower arm (20) of a suspension including an upper arm (10) and a lower arm (20).

## Patentansprüche

1. Fahrzeugradaufhängungsstruktur mit:
einem Tragarm (20), der sich in einer Links-Rechts-Richtung einer Fahrzeugkarosserie von einem Schwenkschaft (21) erstreckt, der als eine Drehmitte dient;
einer Radbefestigungseinheit (30), an der ein Rad montiert ist, wobei die Radbefestigungseinheit (30) eingerichtet ist, um das Rad anzutreiben; und
ein Kugelgelenk (22), das an einer Position angeordnet ist, die eine Rotationsmittellinie des durch die Radbefestigungseinheit (30) angetriebenen Rads schneidet, wobei das Kugelgelenk (22) mit dem Tragarm (20) und mit der Radbefestigungseinheit (30) verbunden ist,
**dadurch gekennzeichnet, dass**
der Schwenkschaft (21), der als die Drehmitte des Tragarms (20) dient, oberhalb eines Seitenleiterrahmens (110) positioniert ist,
die Radbefestigungseinheit (30) einen Rotorkern (321), eine Rotorwelle (322) und ein Verbindungsbauteil (323) umfasst,
der Rotorkern (321) im Wesentlichen eine dicke zylindrische Form mit einer kurzen Achse hat und unmittelbar im Inneren eines Motorgehäuses (31) angeordnet ist,
die Motorwelle (322) durch das Motorgehäuse (31) über ein einreihiges Lager (351), das an einer Fahrzeugkarosserieseite angeordnet ist, und ein zweireihiges Lager (352) gestützt ist, das an einer Außenseite angeordnet ist, wobei die Rotorwelle (322) derart eingerichtet ist, dass eine Nabe (324) zum Montieren des Rads an ein vorderstes Ende der Rotorwelle (322), das von dem Motorgehäuse und weiter in Richtung einer Außenseite des zweireihigen Lagers (352), das an der Außenseite angeordnet ist, heraus steht, kerbverzahnt gepasst und befestigt und durch eine Mutter (325) gesichert ist, und die Radbefestigungseinheit (30) eingerichtet ist, um das an der Nabe (324) montierte Rad durch eine Drehung der Rotorwelle (322) anzutreiben.

2. Fahrzeugradaufhängungsstruktur gemäß Anspruch 1, wobei die Nabe (324) in einem Straßenrad (210) des Rads angeordnet ist, um das Rad anzutreiben.

3. Fahrzeugradaufhängungsstruktur gemäß Anspruch 1 oder 2, wobei
die Radbefestigungseinheit (30) einen fahrzeugkarosserieseitigen vorbestimmten Bereich (31c) hat, durch den die Rotationsmittellinie des Rads hindurchgeht, wobei der vorbestimmte Bereich in einer vertieften Form ausgebildet ist, und
das Kugelgelenk (22) derart angeordnet ist, dass mindestens ein Teil davon in dem vertieften Abschnitt (31c) der Radbefestigungseinheit (30) positioniert ist.

4. Fahrzeugradaufhängungsstruktur gemäß Anspruch 3, wobei
der Kopplungsteil (36) des Motorkabels (50), das mit dem Radnabenmotor verbunden ist, in dem vertieften Abschnitt (31c) der Radbefestigungseinheit (30) vorgesehen ist.

5. Fahrzeugradaufhängungsstruktur gemäß einem der Ansprüche 1 bis 4, wobei
die Radbefestigungseinheit (30) mit einem Kugelgelenkmontageabschnitt (31b) versehen ist, der eingerichtet ist, um das Kugelgelenk (22) an der Position anzuordnen, die die Rotationsmittellinie des Rads schneidet.

6. Fahrzeugradaufhängungsstruktur gemäß einem der Ansprüche 1 bis 5, wobei
das zweireihige Lager (352) im Inneren einer Bremseinheit (34) angeordnet ist.

7. Fahrzeugradaufhängungsstruktur gemäß einem der Ansprüche 1 bis 6, wobei
das zweireihige Lager (352) angeordnet ist, um die Reifenmittellinie zu schneiden.

8. Fahrzeugradaufhängungsstruktur gemäß einem der Ansprüche 1 bis 7, wobei
der Tragarm (20) ein unterer Arm (20) einer Radaufhängung ist, die einen oberen Arm (10) und einen unteren Arm (20) umfasst.

## Revendications

1. Structure de suspension de véhicule comprenant :
un bras de suspension (20) qui s'étend dans une direction gauche - droite d'un bâti de véhicule à partir d'un arbre de pivot (21) servant de centre d'oscillation ;
une unité de montage de roue (30) sur laquelle une roue est montée, l'unité de montage de roue (30) étant configurée pour entraîner la roue ; et
un joint à rotule (22) qui est agencé dans une position coupant une ligne centrale de rotation de la roue entraînée par l'unité de montage de roue (30), le joint à rotule (22) étant relié au bras de suspension (20) et à l'unité de montage de roue (30),
**caractérisée en ce que** :
l'arbre de pivot (21) servant de centre d'oscillation du bras de suspension (20) est positionné au-dessus d'un support du côté de l'échelle (110),
l'unité de montage de roue (30) comprend un noyau de rotor (321), un arbre de rotor (322) et un élément de raccordement (323),
le noyau de rotor (321) a une forme cylindrique sensiblement épaisse ayant un axe court et étant agencé immédiatement à l'intérieur d'un boîtier de moteur (31),
l'arbre de rotor (322) est supporté par le boîtier de moteur (31) via un palier à rangée unique (351) agencé du côté du bâti du véhicule et un palier à double rangée (352) agencé sur un côté externe, l'arbre de rotor (322) étant configuré de sorte qu'un moyeu (324) pour monter la roue est ajusté par cannelure et fixé et attaché par un écrou (325) à une extrémité de pointe de l'arbre de rotor (322) faisant saillie du boîtier de moteur et davantage vers l'extérieur du palier à double rangée (352) agencé sur le côté externe, et l'unité de montage de roue (30) étant configurée pour entraîner la roue montée sur le moyeu (324) par la rotation de l'arbre de rotor (322) .

2. Structure de suspension de véhicule selon la revendication 1, dans laquelle le moyeu (324) est agencé sur une roue de route (210) de la roue afin d'entraîner la roue.

3. Structure de suspension de véhicule selon la revendication 1 ou 2, dans laquelle :
l'unité de montage de roue (30) a une région prédéterminée du côté du bâti de véhicule (31c) à travers laquelle passe la ligne centrale de rotation de la roue, la région prédéterminée étant formée selon une forme évidée, et
le joint rotule (22) est agencé de sorte qu'au moins une partie de ce dernier est positionnée dans la partie évidée (31c) de l'unité de montage de roue (30).

4. Structure de suspension de véhicule selon la revendication 3, dans laquelle :
la partie de couplage (36) du câble de moteur (50) raccordée au moteur de roue est prévue dans la partie évidée (31c) de l'unité de montage de roue (30).

5. Structure de suspension de véhicule selon l'une quelconque des revendications 1 à 4, dans laquelle :
l'unité de montage de roue (30) est prévue avec une partie de montage de joint à rotule (31b) qui est configurée pour agencer le joint à rotule (22) dans la position coupant la ligne centrale de rotation de la roue.

6. Structure de suspension de véhicule selon l'une quelconque des revendications 1 à 5, dans laquelle :
le palier à double rangée (352) est agencé à l'intérieur d'une unité de frein (34).

7. Structure de suspension de véhicule selon l'une quelconque des revendications 1 à 6, dans laquelle :
le palier à double rangée (352) est agencé pour couper la ligne centrale de pneu.

8. Structure de suspension de véhicule selon l'une quelconque des revendications 1 à 7, dans laquelle :
le bras de suspension (20) est un bras inférieur (20) d'une suspension comprenant un bras supérieur (10) et un bras inférieur (20).
